(19) 

(11) **EP 4 576 253 B1**

(12) **EUROPEAN PATENT SPECIFICATION**

(45) Date of publication and mention of the grant of the patent:
**12.08.2026 Bulletin 2026/33**

(21) Application number: **24222090.3**

(22) Date of filing: **20.12.2024**

(51) International Patent Classification (IPC):
***H01M 4/36*** *(2006.01)* ***H01M 4/38*** *(2006.01)*
***H01M 4/587*** *(2010.01)* ***H01M 10/0525*** *(2010.01)*
***H01M 10/0567*** *(2010.01)* ***H01M 10/0569*** *(2010.01)*

(52) Cooperative Patent Classification (CPC):
**H01M 4/386; H01M 4/364; H01M 4/587; H01M 10/0525; H01M 10/0567; H01M 10/0569;**
H01M 2300/0034; H01M 2300/0037; Y02E 60/10

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.12.2023 KR 20230190463**
**18.12.2024 KR 20240190555**

(43) Date of publication of application:
**25.06.2025 Bulletin 2025/26**

(73) Proprietor: **LG Energy Solution, Ltd.**
**Seoul 07335 (KR)**

(72) Inventors:
- **JO, Mi Ru**
  **Daejeon 34122 (KR)**
- **JEON, Ye Ji**
  **Daejeon 34122 (KR)**
- **OH, Song Taek**
  **Daejeon 34122 (KR)**

(74) Representative: **Plasseraud IP**
**104 Rue de Richelieu**
**CS92104**
**75080 Paris Cedex 02 (FR)**

(56) References cited:
**CN-A- 116 759 641**
**CN-B- 109 088 099**
**KR-A- 20170 121 283**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 576 253 B1

## Description

## BACKGROUND OF THE INVENTION

### Field of the Invention

The present invention relates to a lithium secondary battery, and more particularly, to a lithium secondary battery exhibiting excellent capacity characteristics, excellent lifespan characteristics, and excellent high-temperature lifespan characteristics.

### Description of the Related Art

With a rapid increase in the use of fossil fuels, there is a growing demand for the use of alternative energy or clean energy, and in response, fields of power generation and energy storage using electrochemical reactions have been most actively studied.

Currently, secondary batteries are a representative example of an electrochemical element that utilizes electrochemical energy, and the extent of the usage thereof is increasing. Lately, technological advancements and increasing demand for portable devices such as portable computers, portable phones, and cameras have driven a significant surge in the demand for secondary batteries as an energy source, and in particular, extensive research has been conducted on high energy density, that is, high capacity lithium secondary batteries, which are now commercially available and widely used.

Lithium secondary batteries are generally prepared through a method as follows. An electrode assembly is formed by disposing a separator between a positive electrode including a positive electrode active material formed of a transition metal oxide containing lithium and a negative electrode including a negative electrode active material capable of storing lithium ions, the electrode assembly is inserted into a battery case, a non-aqueous electrolyte that becomes a medium for delivering lithium ions is injected, and then the battery case is sealed. The non-aqueous electrolyte is generally composed of a lithium salt and an organic solvent capable of dissolving the lithium salt. Carbon-based materials such as natural graphite or artificial graphite have been typically used as a negative electrode active material for lithium secondary batteries. However, since the carbon-based negative electrode active materials have small capacity and a low rate of reaction with lithium, secondary batteries to which the carbon-based negative active materials are applied are not capable enough to achieve high capacity and quick charging performance.

In response, efforts have been made to develop lithium secondary batteries using a mixture of silicon-based negative electrode active materials, such as silicon oxide ($SiO_x$, $0<x<2$) with high theoretical capacity, and carbon-based negative electrode active materials. The silicon-based materials have a higher theoretical capacity than the carbon-based materials and have a high rate of reaction with lithium, and thus are capable of improving capacity characteristics and quick charging performance. For instance documents CN10088099B, KR20170121283A and CN116759641A disclose different secondary batteries.

However, silicon oxide from silicon-based particles such as $SiO_x$ ($0\leq x<2$) reacts with Li ions generated from a positive electrode during charging to form lithium silicate, which is an irreversible phase. Consequently, the batteries exhibit low initial efficiency. In addition, silicon-based particles such as Pure Si undergo severe volume changes upon charging/discharging, and these volume changes of the silicon-based particles cause a number of issues, such as deterioration in durability of a pre-formed SEI layer, continuous electrolyte consumption resulting from the generation of new negative electrode surface, and an increase in thickness of an SEI layer.

## SUMMARY OF THE INVENTION

An aspect of the present invention provides a lithium secondary battery stably forming an SEI layer on a negative electrode active material layer and exhibiting excellent capacity characteristics, excellent lifespan characteristics, and excellent high-temperature lifespan characteristics.

An aspect of the present disclosure refers to a lithium secondary battery including an electrode assembly including a positive electrode, a negative electrode, and a separator placed between the positive electrode and the negative electrode, an electrolyte, and a battery case accommodating the electrode assembly and the electrolyte, wherein the negative electrode includes a negative electrode active material layer containing graphite and a Si/C composite, the positive electrode includes a positive electrode active material layer containing a lithium transition metal oxide represented by Formula 1:

[Formula 1] $Li_{1+x1}[Ni_{y1}Co_{z1}Mn_{w1}M^1_{v1}]O_2$

wherein $M^1$ is at least one doping element selected from the group consisting of Al, W, Cu, Fe, V, Cr, Ti, Zr, Zn, In, Ta, Y, In, La, Sr, Ga, Sc, Gd, Sm, Ca, Ce, Nb, Mg, B, and Mo, where $0 \leq x1 \leq 0.2$, $0.50 \leq y1 < 1$, $0 < z1 < 0.35$, $0 < w1 < 0.4$, and $0 \leq v1 \leq 0.1$;

the electrolyte includes a non-fluorinated saturated cyclic carbonate and a fluorine-based compound in a weight ratio of 40:1 to 40:20, and the fluorine-based compound is present in an amount of 1 wt% to 5 wt% with respect to a total weight of the electrolyte, and the graphite and the Si/C composite are present in a weight ratio of 93.1:6.9 to 99.9:0.1 in the negative electrode active material layer.

In some embodiments, the Si/C composite is present in an amount of 1 wt% to 15 wt% with respect to a total weight of the negative electrode active material layer.

In some embodiments, the Si/C composite contains silicon (Si) and carbon (C) in a weight ratio of 1:10 to 23:10.

In some embodiments, the graphite and the Si/C composite is present in a weight ratio of 94:6 to 99:1 in the negative electrode active material layer.

In some embodiments, the Si/C composite comprises silicon particles embedded within a carbon matrix.

In some embodiments, the non-fluorinated saturated cyclic carbonate is present in an amount of 10 wt% to 40 wt% with respect to a total weight of the electrolyte.

In some embodiments, the non-fluorinated saturated cyclic carbonate includes at least one selected from the group consisting of ethylene carbonate (EC), propylene carbonate (PC), 1,2-butylene carbonate, 2,3-butylene carbonate, 1,2-pentylene carbonate, and 2,3-pentylene carbonate.

In some embodiments, the fluorine-based compound is fluoroethylene carbonate (FEC).

In some embodiments, the electrolyte includes a lithium salt.

In some embodiments, the lithium salt is present at a concentration of 0.5 M to 2.0 M in the electrolyte.

In some embodiments, the electrolyte further comprises a non-fluorinated linear carbonate-based solvent in an amount of 40 wt% to 80 wt% based on a total weight of the electrolyte.

In some embodiments, the battery case is a pouch type battery case.

[10] Another aspect of the disclosure refers to a lithium secondary battery including an electrode assembly including a positive electrode, a negative electrode, and a separator placed between the positive electrode and the negative electrode, an electrolyte, and a battery case accommodating the electrode assembly and the electrolyte, wherein the negative electrode comprises a negative electrode active material layer containing graphite and a Si/C composite,

the graphite and the Si/C composite are present in a weight ratio of 93.1:6.9 to 99.9:0.1 in the negative electrode active material layer,

the negative electrode includes a negative electrode active material layer and a solid electrolyte interphase (SEI) layer placed on the negative electrode active material layer, and

the SEI layer contains $Li_2CO_3$ and LiF in a weight ratio of 1:1 to 3:1.

## BRIEF DESCRIPTION OF THE DRAWINGS

The above and other aspects, features and other advantages of the present disclosure will be more clearly understood from the following detailed description taken in conjunction with the accompanying drawings, in which:

FIG. 1 is an exploded view of a lithium secondary battery according to the present disclosure; and

FIG. 2 is a graph showing experiment results on a high temperature lifespan characteristics according to Experimental Example 1 of lithium secondary batteries manufactured in Examples 1 to 3 and Comparative Examples 1 to 5.

## DETAILED DESCRIPTION

It will be understood that the words or terms used in the present description and claims should be interpreted as having meanings that are consistent with their meanings in the context of the relevant art and the technical field of the invention, based on the principle that an inventor may properly define the meaning of the words or terms to best explain the claimed invention.

The particular example and embodiments disclosed herein are intended to describe the claimed invention and are not intended to be limiting of the present invention. The singular forms are intended to include the plural forms as well, unless the context clearly indicates otherwise.

It will be further understood that the term "include", "comprise", or "have" as used herein, specifies the presence of stated features, numbers, steps, elements, or combinations thereof, but does not preclude the presence or addition of one or more other features, numbers, steps, elements, or combinations thereof.

As used herein, the term "single particle type particle" indicates a particle composed of 30 or fewer sub-particles.

Each "sub-particle" unit constituting the single particle type particles is referred to as a "nodule". The single particle type particle includes "single particles" formed of a single nodule, and "quasi-single particles" which are a composite formed of 30 or fewer nodules.

As used herein, the term "nodule" indicates a distinct, but not separate, sub-particle unit body constituting a single particle and a quasi-single particle, wherein the nodule may be a single crystal lacking any crystalline grain boundaries, or may be a polycrystal in which grain boundaries are not present when observed in a field of view of 5000× to 20000× using a scanning electron microscope (SEM).

As used herein, the term "secondary particle" indicates a particle formed by aggregation of more than 30 sub-particles. To distinguish the sub-particles constituting the single particle type particles above, each sub-particle unit constituting the secondary particles is referred to as a "primary particle".

As used herein, when "particle" is described, any one or all of a single particle, a quasi-single particle, a primary particle, a nodule, and a secondary particle may be encompassed.

As used herein, the term "average particle size $D_{50}$" indicates a particle size with respect to 50% in the volume accumulated particle size distribution of a powder, for instance of a positive electrode active material powder, and may be measured using a laser diffraction method. For example, the average particle size $D_{50}$ may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle size at 50% of the volume accumulation is calculated.

The lithium secondary battery according to the present disclosure may include at least one of the following components, and may include any combination of technically feasible components among the following components.

## Lithium secondary battery

A lithium secondary battery according to the present disclosure includes an electrode assembly including a positive electrode, a negative electrode, and a separator placed between the positive electrode and the negative electrode, an electrolyte, and a battery case accommodating the electrode assembly and the electrolyte, where the negative electrode includes a negative electrode active material layer containing graphite and a Si/C composite, the positive electrode includes a positive electrode active material layer containing a lithium transition metal oxide represented by Formula 1 as a positive electrode active material:

[Formula 1] $Li_{1+x1}[Ni_{y1}Co_{z1}Mn_{w1}M^1_{v1}]O_2$

wherein $M^1$ is at least one doping element selected from the group consisting of Al, W, Cu, Fe, V, Cr, Ti, Zr, Zn, In, Ta, Y, In, La, Sr, Ga, Sc, Gd, Sm, Ca, Ce, Nb, Mg, B, and Mo, where $0 \le x1 \le 0.2$, $0.50 \le y1 < 1$, $0 < z1 < 0.35$, $0 < w1 < 0.35$, and $0 \le v1 \le 0.1$;

the electrolyte includes a non-fluorinated saturated cyclic carbonate and a fluorine-based compound in a weight ratio of 40:1 to 40:20,

and the graphite and the Si/C composite are present in a weight ratio of 93.1:6.9 to 99.9:0.1 in the negative electrode active material layer.

Carbon-based materials such as natural graphite or artificial graphite have been used as a negative electrode active material for lithium secondary batteries. However, the carbon-based negative electrode active materials have small capacity and a low rate of reaction with lithium, and as a consequence, secondary batteries to which those carbon-based negative active materials are applied do not achieve high capacity and quick charging performance.

Accordingly, silicon-based active materials are under development for use as negative electrode active material, since silicon-based $SiO_x$ particles, which are commonly used as a negative electrode active material, offer about 10 times the capacity of carbon-based negative electrode active materials. However, the silicon-based $SiO_x$ particles undergo significant volume changes when subjected to charging and discharging cycles, and may thus cause breakage of conductive connections within a negative electrode, resulting in increased resistance and decreased lifespan performance. In addition, the use of the silicon-based particles may affect the SEI (solid electrolyte interface) layer. The SEI layer is formed during activation of a lithium secondary battery due to reactions between electrolyte molecules and lithium ions resulting in the formation of said SEI layer on the negative electrode active material layer. The activation indicates a process of charging and/or discharging a lithium secondary battery manufactured but not yet charged or discharged to provide electrical characteristics, and forming an SEI layer on an electrode to stabilize the battery, thereby making the battery ready for actual use. The SEI layer indicates a passive film formed from by-products from chemical reactions between an electrolyte and a negative electrode during charging in the activation process of a lithium secondary battery. The SEI layer protects the electrolyte against further decomposition but an increase in the thickness of the SEI layer may

limit the capacity of the battery by limiting the transmission of lithium ions and therefore, the formation of a stable SEI layer is desired. In that connection, the change of volume due to the use of the silicon-based particles may cause continuous rupture and regeneration of an SEI layer of a negative electrode formed in an activation process of a lithium secondary battery, thereby promoting side reactions of an electrolyte, increasing a thickness of the SEI layer, and therefore, increasing resistance of the battery and depleting the electrolyte, which may result in degradation in lifespan performance and storage characteristics of the battery.

To address these issues, the lithium secondary battery according to the present disclosure comprises a mixture of graphite and a Si/C composite as a negative electrode active material, where this mixture may provide greater physical strength and chemical stability when compared to those of silicon-based $SiO_x$ particles, resulting in a negative active material which undergoes less volume expansion during charging and discharging of the battery, and may provide greater capacity than the carbon-based active materials used alone.

In that regard, the lithium secondary battery according to the present disclosure comprises a positive electrode including a lithium transition metal oxide containing nickel, cobalt, and manganese according to the Formula 1 as defined in the present disclosure, together with the negative electrode active material comprising graphite and Si/C composite in a specific weight ratio described in the present disclosure, and includes an electrolyte comprising a non-fluorinated saturated cyclic carbonate and a fluorine-based compound at a specific weight ratio, resulting in the formation of a SEI layer having excellent stability and durability (both in terms of composition and thickness) on a negative electrode.

As a result, the present disclosure also refers to a lithium secondary battery comprising an electrode assembly comprising a positive electrode, a negative electrode, and a separator placed between the positive electrode and the negative electrode; an electrolyte; and a battery case accommodating the electrode assembly and the electrolyte, wherein the negative electrode comprises a negative electrode active material layer containing graphite and a Si/C composite, the graphite and the Si/C composite are present in a weight ratio of 93.1:6.9 to 99.9:0.1 in the negative electrode active material layer, the negative electrode comprises a negative electrode active material layer and a solid electrolyte interphase (SEI) layer placed on the negative electrode active material layer, and wherein the SEI layer contains $Li_2CO_3$ and LiF in a weight ratio of 1:1 to 3:1.

The lithium secondary battery according to the present disclosure may thus inhibit an increase in thickness of the SEI layer caused by volume changes of the Si/C composite during charging and discharging, prevent electrolyte side reactions and electrolyte depletion, reduce side reactions between the electrolyte and the negative electrode active material to decrease degradation of the negative electrode active material, and mitigate the swelling of the battery. Accordingly, the lithium secondary battery herein disclosed may exhibit excellent capacity characteristics, excellent lifespan characteristics, and excellent high-temperature lifespan characteristics.

Hereinafter, each component of the lithium secondary battery according to the present disclosure will be described in detail.

## Electrode assembly

An electrode assembly according to the present invention includes a positive electrode, a negative electrode, and a separator placed between the positive electrode and the negative electrode.

Specifically, the electrode assembly may be formed by sequentially stacking the positive electrode, the separator, and the negative electrode, and the positive electrode and the negative electrode may be mutually insulated by the separator.

Types of the electrode assembly may include a stack type, a jelly roll type, and a stack and folding type, but are not limited thereto.

Hereinafter, each component of the electrode assembly according to the present disclosure will be described in detail.

### Positive electrode

The positive electrode may include a positive electrode active material layer, and may specifically include a positive electrode current collector, and a positive electrode active material layer placed on the positive electrode current collector.

As the positive electrode current collector, various positive electrode current collectors known in the art may be used. For example, stainless steel, aluminum, nickel, titanium, fired carbon, or aluminum or stainless steel that is surface-treated with one of carbon, nickel, titanium, silver, or the like may be used as the positive electrode current collector. The positive electrode current collector may typically have a thickness of 3 to 500 $\mu m$, 5 to 300 $\mu m$, or 8 to 100 $\mu m$, and fine irregularities may be formed on a surface of the positive electrode current collector to enhance adhesion of the positive electrode active material. For example, the positive electrode current collector may be used in various forms such as a film, a sheet, a foil, a net, a porous body, a foam body, and a non-woven fabric body.

The positive electrode active material layer may be placed on the positive electrode current collector, and may specifically be placed on one surface or both surfaces of the positive electrode current collector. The positive electrode active material layer may have a single-layer structure or a multi-layer structure of two or more layers, and wherein a boundary surface may be present or not between the two or more positive electrode active material layers.

The positive electrode active material layer includes a lithium transition metal oxide represented by Formula 1 below as a positive electrode active material:

[Formula 1] $Li_{1+x1}[Ni_{y1}Co_{z1}Mn_{w1}M^1_{v1}]O_2$

wherein $M^1$ is at least one doping element selected from the group consisting of Al, W, Cu, Fe, V, Cr, Ti, Zr, Zn, In, Ta, Y, In, La, Sr, Ga, Sc, Gd, Sm, Ca, Ce, Nb, Mg, B, and Mo, where $0 \leq x1 \leq 0.2$, $0.50 \leq y1 < 1$, $0 < z1 < 0.35$, $0 < w1 < 0.4$, and $0 \leq v1 \leq 0.1$.

In Formula 1 above, $M^1$ may be at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo, and may preferably be at least one doping element selected from the group consisting of W, Y, Ba, Ca, Ti, Mg, Ta, and Nb.

The 1+x1 indicates a molar ratio of lithium (Li) in the lithium transition metal oxide, where $0 \leq x1 \leq 0.2$, preferably $0 \leq x1 \leq 0.15$, and more preferably $0 \leq x1 \leq 0.1$. When the above range is satisfied, the controlling of Li content may significantly improve capacity characteristics of the lithium transition metal oxide, and also improve the sintering property in the production of lithium transition metal oxide.

The y1 indicates a molar ratio of nickel in relation to all the metals in the lithium transition metal oxide of formula 1, excluding lithium, where $0.50 \leq y1 < 1$, preferably $0.52 \leq y1 < 0.9$, more preferably $0.55 \leq y1 < 0.8$, and even more preferably $0.57 \leq y1 < 0.75$. When the above range is satisfied, the content of nickel (Ni) in the lithium transition metal oxide is secured to a level sufficient for charge and discharge, thereby achieving high capacity and excellent structural stability, resulting in improved thermal stability.

The z1 indicates a molar ratio of cobalt in relation to all metals in the lithium transition metal oxide of formula 1, excluding lithium, where $0 < z1 < 0.35$, preferably $0 < z1 \leq 0.25$, more preferably $0.01 \leq z1 \leq 0.20$, and even more preferably $0.03 \leq z1 \leq 0.15$. When the above range is satisfied, the lithium transition metal oxide contains a small amount of cobalt, and accordingly, cost savings as well as satisfactory resistance characteristics and output characteristics may be achieved.

The w1 indicates a molar ratio of Mn in relation to all metals in the lithium transition metal oxide of formula 1, excluding lithium, where $0 < w1 < 0.4$, preferably $0.01 \leq w1 \leq 0.37$, more preferably $0.05 \leq w1 \leq 0.35$, and even more preferably $0.1 \leq w1 \leq 0.32$. When the above range is satisfied, the lithium transition metal oxide may have improved structural stability.

The v1 indicates a molar ratio of $M^1$ in relation to all metals in the lithium transition metal oxide of formula 1, excluding lithium, where $0 \leq v1 \leq 0.1$, preferably $0 \leq v1 \leq 0.08$, and more preferably $0 \leq v1 \leq 0.05$. In some embodiments v1 is 0. When the above range is satisfied, the lithium transition metal oxide may have improved structural stability.

In addition, the lithium transition metal oxide may comprise single particle type particles according to the present disclosure, i.e. the lithium transition metal oxide may comprise single particles, quasi-single particles, or a combination thereof, wherein a single particle is a particle formed of a single nodule, and a quasi-single particle is a particle which is a composite formed of 30 or fewer nodules. In some embodiments the lithium transition metal oxide may be consisting of single particle type particles according to the present disclosure.

Specifically, when the lithium transition metal oxide comprises secondary particles which are aggregates of more than 30 sub-particles (primary particles) or more, particle breakage increases during electrode manufacturing, and internal cracks are caused due to volume expansion/contraction of primary particles during charge/discharge, which may reduce the effect of improving high-temperature lifespan characteristics and high-temperature storage characteristics.

Accordingly, when a lithium transition metal oxide, which comprises, or consists of single particle type particles as described above, is used, particles of the positive electrode active material are less broken during rolling since the lithium transition metal oxide has a higher particle strength than a typical lithium transition metal oxide comprising or consisting of secondary particles in which more than 30 and up to several hundreds of primary particles are aggregated.

In addition, since the lithium transition metal oxide according to the present invention, which comprises or consists of single particle type particles, which are particles constituted by a small number, i.e. 30 or less, of primary particles, changes resulting from the volume expansion/contraction of primary particles during charge and discharge are small, and accordingly, the generation of cracks inside the particles is substantially reduced, resulting in excellent lifespan characteristics of a lithium secondary battery.

Meanwhile, the lithium transition metal oxide may have an average particle size ($D_{50}$) of 2 μm to 10 μm, for example 3 μm to 9 μm, 4 μm to 8 μm, 5 μm to 7 μm. The lithium transition metal oxide may have an average particle size ($D_{50}$) of preferably 2.5 μm to 9.8 μm, more preferably 2.6 μm to 9.7 μm, and more preferably 2.7 μm to 9.6 μm. When the above range is satisfied, side reactions with an electrolyte may be minimized while an increase in resistance and degradation in output characteristics are prevented.

The positive electrode active material layer may include the lithium transition metal oxide in an amount of 80 wt% to 99 wt%, preferably 90 wt% to 99 wt%, and more preferably 95 wt% to 98 wt%. When the above range is satisfied, the

lithium secondary battery may have improved energy density and capacity characteristics.

Meanwhile, the positive electrode active material layer may optionally further include at least one of a positive electrode conductive material or a positive electrode binder.

The positive electrode conductive material is used to impart conductivity to an electrode, and any positive electrode conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The positive electrode conductive material may be included in an amount of 0.1 wt% to 30 wt%, preferably 0.3 wt% to 20 wt%, more preferably 0.5 wt% to 10 wt%, even more preferably 0.8 wt% to 5 wt% with respect to the total weight of the positive electrode active material layer.

The positive electrode binder serves to improve the bonding between positive electrode material particles and the adhesion between a positive electrode material and a positive electrode current collector, and specific examples of the positive electrode binder may be fluorine resin-based binders including polyvinylidene fluoride (PVDF) or polytetrafluoroethylene (PTFE); rubber-based binders including styrene butadiene rubber (SBR), acrylonitrile-butadiene rubber, and styrene-isoprene rubber; cellulose-based binders including carboxyl methyl cellulose (CMC), starch, hydroxy propyl cellulose, and regenerated cellulose; polyalcohol-based binders including polyvinyl alcohol; polyolefin-based binders including polyethylene and polypropylene; polyimide-based binders; polyester-based binders; and silane-based binders, and any one thereof or a mixture of two or more thereof may be used. The positive electrode binder may be included in an amount of 0.1 wt% to 30 wt%, preferably 0.5 wt% to 20 wt%, more preferably 0.8 wt% to 10 wt%, even more preferably 1 wt% to 5 wt% with respect to the total weight of the positive electrode active material layer.

Meanwhile, the positive electrode may be manufactured by applying a positive electrode slurry onto one side or both sides of a long sheet-shaped positive electrode current collector, removing a solvent of the positive electrode slurry through a drying process, and then rolling. Meanwhile, a positive electrode including a non-coating portion may be manufactured by applying a positive electrode slurry onto a portion of a positive electrode current collector, whereby another portion of the positive electrode current collector would not be coated with the positive electrode slurry, for example, one end of the positive electrode current collector.

In addition, the positive electrode slurry may be manufactured by dispersing a positive electrode active material in a solvent such as dimethyl sulfoxide (DMSO), isopropyl alcohol, N-methylpyrrolidone (NMP), acetone, or water.

**Negative electrode**

The negative electrode may include a negative electrode active material layer, and may specifically include a negative electrode current collector, and a negative electrode active material layer placed on the negative electrode current collector.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. The negative electrode current collector may generally have a thickness of 3 μm to 500 μm , 5 to 300μm, or 8 to 100μm.

In addition, the negative electrode current collector, like the positive electrode current collector, may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer may be placed on the negative electrode current collector, and may specifically be placed on one surface or both surfaces of the negative electrode current collector. The negative electrode active material layer may have a single-layer structure or a multi-layer structure of two or more layers, and wherein a boundary surface may be present or not between the two or more positive electrode active material layers.

The negative electrode active material layer includes graphite and a Si/C composite as negative electrode active materials.

The lithium secondary battery according to the present invention includes both graphite and a Si/C composite as negative electrode active materials, and may thus achieve a high-capacity battery and inhibit degradation in lifespan characteristics caused by volume change of silicon-based particles during charging and discharging.

The graphite may be at least one selected from the group consisting of artificial graphite and natural graphite, or a mixture of artificial graphite and natural graphite. Preferably the graphite is artificial graphite.

In some embodiments the graphite includes a mixture of artificial graphite and natural graphite, preferably the

artificial graphite and the natural graphite may be included in a weight ratio of 9:1 to 6:4. When the graphite is artificial graphite, or when the graphite is a mixture of artificial graphite and natural graphite satisfying the above range, capacity characteristics may be improved while output characteristics and lifespan characteristics may be excellent.

The Si/C composite may be in a form in which silicon particles are uniformly dispersed in an atomic state within a carbon (C) matrix. Specifically, the term "composite" as used herein indicates a material in which two or more materials are combined to form physically and chemically different phases, exhibiting more effective functions, and the "Si/C composite" does not indicate a state in which Si and carbon (C) are simply aggregated or mixed, but a state in which silicon particles are embedded within a carbon matrix. The carbon matrix is a porous carbon matrix.

When Si is used alone as a silicon-based active material, volume contraction/expansion of Si particles during charging and discharging may cause degradation of a negative electrode active material and an increase in resistance, resulting in reduced lifespan, and when $SiO_x$ ($0 \le x < 2$) is used alone, high capacity in lithium secondary batteries is not fully achieved.

Accordingly, the lithium secondary battery according to the present invention uses a Si/C composite as a silicon-based active material, and may thus have excellent capacity characteristics, exhibit further improved electrical conductivity with carbon having excellent conductivity dispersed in an atomic state inside Si particles, and reduce volume expansion of a negative electrode active material compared to a case where a silicon-based active material composed of Si particles alone is used, thereby having improved lifespan characteristics.

The Si/C composite may contain silicon (Si) and carbon (C) in a weight ratio of 1:10 to 23:10, preferably 1.5:10 to 15:10, more preferably 2:10 to 10:10, and even more preferably 3:10 to 6:10. When the above range is satisfied, the electrical conductivity of the negative electrode active material may be improved, and high capacity may be achieved.

The Si/C composite may be included in an amount of 1 wt% to 15 wt%, 2 wt% to 10 wt%, 3 wt% to 8 wt%, 3.5 wt% to 6.5 wt%, 4 wt% to 6 wt%, or 4.5 wt% to 5.5 wt% with respect to the total weight of the negative electrode active material layer. When the above range is satisfied, the negative electrode may have excellent durability, and accordingly, the lithium secondary battery may exhibit excellent lifespan characteristics, and be manufactured without changing process conditions and equipment, resulting in excellent processability and productivity.

The graphite and the Si/C composite is included in a weight ratio of 93.1:6.9 to 99.9:0.1, 93.5:6.5 to 99.5:0.5, 94:6 to 99:1, 94.2:5.8 to 98.5:1.5, 94.5:5.5 to 98:2, or 94.8:5.2 to 97.5:2.5. When the above range is satisfied, high capacity may be achieved and the volume change of the negative electrode during charging and discharging may be improved, resulting in excellent lifespan characteristics.

Meanwhile, the negative electrode active material layer may further include at least one of a negative electrode conductive material or a negative electrode binder optionally, in addition to the negative electrode active material.

The negative electrode conductive material is used to impart conductivity to an electrode, and any negative electrode conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The negative electrode conductive material may be included in an amount of 0.1 wt% to 30 wt%, preferably 0.3 wt% to 20 wt%, more preferably 0.5 wt% to 10 wt%, even more preferably 0.8 wt% to 5 wt%, with respect to the total weight of the negative electrode active material layer.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The negative electrode binder may be included in an amount of 0.1 wt% to 30 wt%, preferably 0.5 wt% to 20 wt%, more preferably 0.8 wt% to 10 wt%, even more preferably 1 wt% to 5 wt% with respect to the total weight of the negative electrode active material layer.

Meanwhile, when the lithium secondary battery according to the present invention is activated, this activation results in the formation of a solid electrolyte interphase (SEI) layer, the negative electrode may include a negative electrode active material layer and a solid electrolyte interphase (SEI) layer placed on the negative electrode active material layer.

The SEI layer may contain $Li_2CO_3$ and LiF in a weight ratio of 1:1 to 3:1, preferably 1.2:1 to 3:1, more preferably 1.5:1 to 3:1, more preferably 2:1 to 3:1, and more preferably 2.3:1 to 2.5:1. When the range is satisfied, a stable SEI layer may be formed, thereby improving lifespan characteristics.

The activation of the lithium secondary battery manufactured may include charging and discharging.

The charging may involve charging up to 4.1 to 4.3 V, preferably 4.3V at 0.1 to 0.5 C, preferably 0.3C under CC/CV conditions.

The discharging may involve discharging from 4.3 V to 2.3V to 2.7V, preferably 2.5 V at 0.1 to 0.5 C, preferably 0.3C under CC conditions.

**Separator**

The separator is placed between the positive electrode and the negative electrode, and thus serves to separate the negative electrode and the positive electrode and provide a passage for lithium ion migration, and any separator commonly used in lithium secondary batteries may be used without particular limitation. Specifically, as the separator, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stack structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength.

**Electrolyte**

An electrolyte according to the present invention includes a non-fluorinated saturated cyclic carbonate and a fluorine-based compound in a weight ratio of 40:1 to 40:20, preferably 40:2 to 40:15, more preferably 40:2.5 to 40:10, and even more preferably 40:3 to 40:7.

The lithium secondary battery according to the present invention includes both the non-fluorinated saturated cyclic carbonate and the fluorine-based compound in the electrolyte, and may thus result in an SEI layer formed on a negative electrode with improved strength and flexibility, thereby providing a stable and highly durable SEI layer, and accordingly inhibit rupture of the SEI layer even under significant volume changes in the negative electrode active material during charging and discharging, thereby mitigating degradation of lifespan characteristics.

Meanwhile, when the electrolyte contains too little fluorine-based compounds relative to the non-fluorinated saturated cyclic carbonate, there may be a limit to improving the lifespan performance of the lithium secondary battery, and when the electrolyte contains too much non-fluorinated saturated cyclic carbonate relative to the fluorine-based compounds, gas may be generated due to decomposition of the electrolyte upon driving the lithium secondary battery at high temperatures, which may result in reduced lifespan performance at high temperatures. Therefore, the present invention includes the non-fluorinated saturated cyclic carbonate and the fluorine-based compound in the above weight ratio, and may thus stably form an SEI layer, thereby preventing the SEI layer rupture caused by volume expansion of a Si/C composite during charging and discharging, improve lifespan characteristics of the lithium secondary battery at high temperatures, and mitigate the swelling of the battery.

The non-fluorinated saturated cyclic carbonate is an organic solvent that serves to strengthen an SEI layer formed on a negative electrode, and may include at least one selected from the group consisting of ethylene carbonate (EC), propylene carbonate (PC), 1,2-butylene carbonate, 2,3-butylene carbonate, 1,2-pentylene carbonate, and 2,3-pentylene carbonate, and may preferably include ethylene carbonate.

The non-fluorinated saturated cyclic carbonate may be included in an amount of 5wt% to 60wt%, preferably 10 wt% to 50 wt%, preferably 15 wt% to 37 wt%, more preferably 20 wt% to 35 wt%, and even more preferably 25 wt% to 33 wt%, with respect to a total weight of the electrolyte. When the non-fluorinated saturated cyclic carbonate is included in the above range, the SEI layer formed on a negative electrode may have improved strength.

The fluorine-based compound serves to protect an interface of the Si/C composite, and may be at least one selected from the group consisting of 2-fluorophenylacetonitrile, 4-fluorophenylacetonitrile, fluorobenzene, 2-fluorobenzonitrile, 4-fluorobenzonitrile, difluorobenzonitrile, trifluorobenzonitrile, lithium oxalyldifluoroborate, $LiN(SO_2F)_2$ (lithium bis(fluorosulfonyl)imide, LiFSI), LiN $(SO_2CF_3)_2$ (lithium bis(trifluoromethane sulfonyl) imide, LiTFSI), $LiPO_2F_2$, LiODFB, $LiBF_4$, and fluoroethylene carbonate (FEC), and may preferably be fluoroethylene carbonate (FEC).

The fluorine-based compound may be included in an amount of 1 wt% to 5 wt%, preferably 2 wt% to 4.5 wt%, and more preferably 2.5 wt% to 4 wt%, with respect to a total weight of the electrolyte. When the above fluorine-based compound is included in the range described above, an interface between the Si/C composite and the electrolyte may be protected without an increase in gas generation.

Meanwhile, the electrolyte may further include a non-fluorinated linear carbonate as a solvent. The non-fluorinated saturated cyclic carbonate and non-fluorinated linear carbonate are in a volume ratio of from 1:9 to 5:5.

The non-fluorinated linear carbonate-based solvent is an organic solvent having a low viscosity and a low dielectric constant, and, for example, may include at least one solvent selected from the group consisting of dimethyl carbonate (DMC), diethyl carbonate (DEC), dipropyl carbonate, ethylmethyl carbonate (EMC), methylpropyl carbonate,

and ethylpropyl carbonate, and may specifically include at least one solvent selected from the group consisting of ethylmethyl carbonate (EMC) and dimethyl carbonate (DMC), preferably ethylmethyl carbonate (EMC). When the non-fluorinated linear carbonate-based solvent is included, the electrolyte may be prevented from having excessively increased viscosity, thereby exhibiting further improved impregnation property.

The non-fluorinated linear carbonate-based solvent may be included in an amount of 40 wt% to 90 wt%, preferably 45 wt% to 85 wt%, more preferably 50 wt% to 80 wt%, more preferably 50 wt% to 70 wt%, and even more preferably 65 wt% to 75 wt%, with respect to a total weight of the electrolyte.

The electrolyte may include a lithium salt.

Any compound may be used as the lithium salt without particular limitation as long as it is a compound capable of providing lithium ions used in lithium secondary batteries. Specifically, as the lithium salt, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. In one embodiment, the lithium salt is $LiPF_6$.

The lithium salt may be included at a concentration of 0.5 M to 2.0 M, preferably 0.7 M to 1.8 M, and more preferably 1.0 M to 1.5 M in the electrolyte. When the concentration of the lithium salt is in the above range, the electrolyte has suitable ionic conductivity and viscosity and may thus exhibit excellent performance, and lithium ions may effectively move, thereby leading to improvements in lifespan characteristics, quick charging characteristics, and high temperature lifespan characteristics of cylindrical lithium secondary batteries.

Meanwhile, in addition to the electrolyte constituents, the electrolyte may also further include additives for improving ionic conductivity of batteries, enhancing cation transport rate, improving battery lifespan characteristics, inhibiting battery capacity reduction, and increasing battery discharge capacity.

For example, the additive may include at least one additive selected from the group consisting of a non-fluorinated unsaturated cyclic carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the additive may be at least one additive selected from the group consisting of vinylene carbonate (VC), vinylethylene carbonate, 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, succinonitrile, adiponitrile, acetonitrile, propionitrile, butyronitrile, valeronitrile, caprylonitrile, heptanenitrile, cyclopentane carbonitrile, cyclohexane carbonitrile, phenylacetonitrile, triethanolamine, ethylene diamine, tetravinylsilane, and LiBOB (lithium bisoxalatoborate ($LiB(C_2O_4)_2$), and may preferably be vinylene carbonate.

The electrolyte may contain the additive in an amount of 1.5 wt% or less, preferably 1.2 wt% or less, and more preferably 1.0 wt% or less. When the additives are present in an amount of less than 0.01 wt%, the effects of improving the low-temperature output, high-temperature storage characteristics, and high-temperature lifespan characteristics of batteries are insignificant, and when the additives are present in an amount of greater than 1.5 wt%, there is a chance that side reactions in an electrolyte may occur excessively during charging and discharging of batteries. In particular, when the SEI layer-forming additives are added in excessive amounts, the additives may not be sufficiently decomposed at high temperatures, and thus may remain as unreacted substances or precipitated substances in an electrolyte at room temperature. Accordingly, side reactions that reduce the lifespan or resistance characteristics of a secondary battery may occur.

When the additive content falls within the specified range, the low-temperature output characteristics, high-temperature storage characteristics, and high-temperature lifespan characteristics of the battery may be improved, and side reactions within the electrolyte during battery charging and discharging may be suppressed, resulting in improved lifespan characteristics and resistance characteristics.

**Battery case**

The battery case may serve to accommodate an electrode assembly and an electrolyte.

Specifically, the battery case is designed to accommodate an electrode assembly, injecting an electrolyte, and then seal the component, and is made from a material having a predetermined flexibility to form an accommodation portion, and may preferably be a cylindrical type, a coin type, a prismatic type, or a pouch type, but is not limited thereto. An upper case and a lower case constituting the battery case may be independent members, or may be substantially a single-body member with one end connected. The external form of the battery case may be produced using a variety of methods without limitation in the present invention.

For example, the battery case may be a pouch-type battery case. The pouch-type battery case may be manufactured by molding a pouch film laminate. The pouch type battery case may accommodate the electrode assembly inside.

In the pouch film laminate, a base layer, a gas barrier layer, and a sealant layer are stacked in this order, but the

embodiment of the present invention is not limited thereto.

Specifically, the base layer is formed on an outermost layer of the pouch film laminate to protect secondary batteries against external friction and collision. The base layer is made of a polymer and may thus electrically insulate the electrode assembly from the outside.

The base layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and teflon. In particular, the base layer may preferably be made of polyethylene terephthalate (PET), nylon, or a combination thereof, which have wear resistance and heat resistance.

The gas barrier layer is stacked between the base layer and the sealant layer to secure mechanical strength of a pouch, block the entry and exit of gases or moisture outside secondary batteries, and prevent electrolyte leakage from the inside of a pouch type battery case. The gas barrier layer may be formed of metal. For example, the gas barrier layer may be a metal thin film containing at least one metal selected from the group consisting of aluminum (Al), copper (Cu), stainless steel (SUS), nickel (Ni), titanium (Ti), and INVAR, but is not limited thereto.

The sealant layer is thermally bonded together at a sealing portion when a pouch type battery case accommodating the electrode assembly inside is sealed to completely seal the inside of the pouch type battery case. To this end, the sealant layer may be formed of a material having excellent heat sealing strength.

The sealant layer may be formed of a material having insulation, corrosion resistance, and sealing properties. Specifically, the sealant layer is in direct contact with the electrode assembly and/or electrolyte (not shown) inside the pouch type battery case, and may thus be formed of a material having insulation and corrosion resistance properties. In addition, the sealant layer is supposed to completely seal the inside of the pouch type battery case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

Specifically, the sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and teflon, and may preferably be formed of polyolefin-based resins such as polypropylene (PP) and/or polyethylene (PE). In this case, the polypropylene may be provided with cast polypropylene (CPP), acid modified polypropylene (PPa), polypropylene-ethylene copolymer, and/or polypropylene-butylene-ethylene terpolymer.

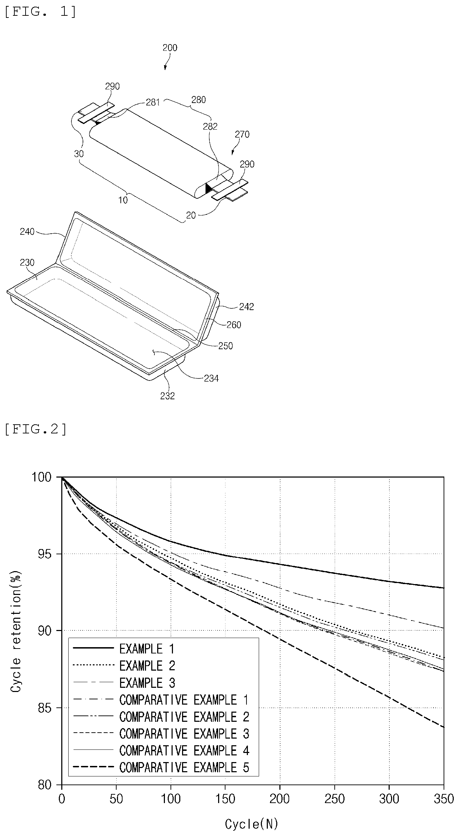

FIG. 1 is an exploded view of a lithium secondary battery according to an aspect of the present disclosure. The pouch film laminate may be drawn, molded, or stretched by a punch or the like to manufacture the pouch type battery case. Accordingly, referring to FIG.1, the pouch type battery case may include a cup portion 232 and an accommodation portion 234. The accommodation portion 234 is a place to accommodate the electrode assembly 270, and may indicate a receiving space formed in the shape of a pocket inside the cup portion 232 as the cup portion 232 is formed.

Meanwhile, the pouch-type battery case may include a first case 230 and a second case 240. The first case 230 may include an accommodation portion 234 capable of accommodating the electrode assembly 270, and the second case 240 may cover the accommodation portion 234 from above to prevent the electrode assembly 270 from being separated to the outside of the battery case. The first case 230 and the second case 240 may be manufactured in a way that one side of the first case 230 and one side of the second case 240 are connected to each other, but the embodiment of the present invention is not limited thereto, and the first case 230 and the second case 240 may be diversely manufactured, for example, individually manufactured by being separated from each other.

According to another embodiment of the present invention, when forming the cup portion 242 or 232 in the pouch film laminate 220, two symmetrical cup portions 242 and 232 may be drawn and molded adjacent to each other in one pouch film laminate 220. In this case, the cup portions 232 and 242 may each be formed in the first case 230 and the second case 240. After accommodating the electrode assembly 270 in the accommodation portion 234 provided in the cup portion 232 of the first case 230, a bridge portion 250 formed between the two cup portions 232 and 242 may be folded such that the two cup portions 242 face each other. In this case, the cup portion 242 of the second case 240 may accommodate the electrode assembly 270 from above. Accordingly, the two cup portions 232 and 242 accommodate one electrode assembly 270, and thus an electrode assembly 270 that is thicker than when there is only one cup portion may be accommodated. In addition, one edge of a secondary battery is formed by folding the pouch type battery case, and accordingly, the number of edges to be sealed may be reduced when a sealing process is performed later. Accordingly, process speed of the pouch type secondary battery 200 may be improved and the number of sealing processes may be reduced.

The pouch type battery case may be sealed while accommodating the electrode assembly 270 so that a portion of an electrode lead 10, which will be described later, i.e., a terminal portion, is exposed. Specifically, when the electrode lead 10 is connected to an electrode tab 280 of the electrode assembly 270 and a lead film 290 is attached to a portion of the electrode lead 10, the electrode assembly 270 may be accommodated in the accommodation portion 234 provided in the

cup portion 232 of the first case 230, and the second case 240 may cover the accommodation portion 234 from above. Then, an electrolyte (not shown) is injected into the accommodation portion 234 and the sealing portion 260 formed on an edge of the first case 230 and the second case 240 may be sealed.

The sealing portion 260 may serve to seal the accommodation portion 234. Specifically, the sealing portion 260 may be formed along an edge of the accommodation portion 234 and may thus seal the accommodation portion 234. The temperature at which the sealing portion 260 is sealed may be 180 °C to 250 °C, specifically 200 °C to 250 °C, more specifically 210 °C to 240 °C. When the sealing temperature satisfies the numerical range described above, the pouch type battery case may obtain sufficient sealing strength through heat sealing.

In this case, the sealing portion 260 may be formed by being folded toward the accommodation portion 234 in order to secure the energy density of the lithium secondary battery.

The lithium secondary battery according to the present invention is useful in portable devices such as a mobile phone, a laptop computer, and a digital camera, and to electric cars such as a hybrid electric vehicle (HEV).

In addition, a battery module or pack including the lithium secondary battery described above as a unit cell may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The lithium secondary battery according to the present invention may be used in a battery cell which is used as a power source for a small-sized device, and may also be preferably used as a unit cell for a medium- and large-sized battery module including a plurality of battery cells.

Examples of the medium-to-large devices include electric vehicles, hybrid electric vehicles, plug-in hybrid electric vehicles, and energy storage systems (ESS), but are not limited thereto.

Hereinafter, the present invention will be described in more detail with reference to specific embodiments.

**Example 1**

<Preparation of negative electrode>

A negative electrode active material, a conductive material, and a binder were mixed in a weight ratio of 97:1:2 in distilled water to prepare a negative electrode slurry.

In this case, artificial graphite and a Si/C composite were mixed in a weight ratio of 95:5 and used as the negative electrode active material (where the Si/C composite contained silicon (Si) and carbon (C) in a weight ratio of 4:10), Super C/SWCNT was used as the conductive material, and styrene-butadiene rubber (SBR) and carboxymethyl cellulose (CMC) were mixed in a weight ratio of 6:4 and used as the binder.

The negative electrode slurry was applied onto a copper thin film, dried, and rolled to prepare a negative electrode.

<Preparation of electrolyte>

As an organic solvent, a mixture of ethylene carbonate and ethylmethyl carbonate at a volume ratio of 3:7 was used.

$LiPF_6$ was added as a lithium salt to the organic solvent and fluoroethylene carbonate (FEC) was added to prepare an electrolyte.

The $LiPF_6$ was included at a molar concentration of 1.2 M in the non-aqueous electrolyte, the ethylene carbonate was included in an amount of 30 wt% in the electrolyte, and the fluoroethylene carbonate was included in an amount of 3 wt% in the electrolyte.

<Manufacture of lithium secondary battery>

A positive electrode active material, a conductive material, and a binder were mixed in a weight ratio of 97:1:2 in distilled water to prepare a positive electrode slurry.

In this case, $Li[Ni_{0.6}Co_{0.1}Mn_{0.3}]O_2$ was used as the positive electrode active material, carbon black was used as the conductive material, and polyvinylidene fluoride (PVDF) was used as the binder.

The positive electrode slurry was applied onto a copper thin film, dried, and rolled to prepare a positive electrode.

A polyethylene porous film separator was placed between the prepared positive and negative electrodes in a dry room, and then the prepared electrolyte was injected to manufacture a lithium secondary battery.

**Example 2**

<Preparation of negative electrode>

A negative electrode was prepared in the same manner as in Example 1.

<Preparation of electrolyte>

As an organic solvent, a mixture of ethylene carbonate and ethylmethyl carbonate at a volume ratio of 5:5 was used.

$LiPF_6$ was added as a lithium salt to the organic solvent to prepare an electrolyte.

The $LiPF_6$ was included at a molar concentration of 1.2 M in the non-aqueous electrolyte, the ethylene carbonate was included in an amount of 50 wt% in the electrolyte, and the fluoroethylene carbonate was included in an amount of 3 wt% in the electrolyte.

<Lithium secondary battery>

A lithium secondary battery was manufactured in the same manner as in Example 1, except that the electrolyte prepared above was used.

**Example 3**

<Preparation of negative electrode>

A negative electrode was prepared in the same manner as in Example 1.

<Preparation of electrolyte>

As an organic solvent, a mixture of ethylene carbonate and ethylmethyl carbonate at a volume ratio of 1:9 was used.

$LiPF_6$ was added as a lithium salt to the organic solvent to prepare an electrolyte.

The $LiPF_6$ was included at a molar concentration of 1.2 M in the non-aqueous electrolyte, the ethylene carbonate was included in an amount of 10 wt% in the electrolyte, and the fluoroethylene carbonate was included in an amount of 5 wt% in the electrolyte.

<Lithium secondary battery>

A lithium secondary battery was manufactured in the same manner as in Example 1, except that the electrolyte prepared above was used.

**Comparative Example 1**

<Preparation of negative electrode>

A negative electrode was prepared in the same manner as in Example 1.

<Preparation of electrolyte>

As an organic solvent, a mixture of ethylene carbonate and ethylmethyl carbonate at a volume ratio of 3:7 was used.

$LiPF_6$ was added as a lithium salt to the organic solvent to prepare an electrolyte.

The $LiPF_6$ was included at a molar concentration of 1.2 M in the non-aqueous electrolyte, and the ethylene carbonate was included in an amount of 30 wt% in the electrolyte.

<Lithium secondary battery>

A lithium secondary battery was manufactured in the same manner as in Example 1, except that the electrolyte prepared above was used.

**Comparative Example 2**

<Preparation of negative electrode>

A negative electrode was prepared in the same manner as in Example 1.

<Preparation of electrolyte>

As an organic solvent, a mixture of ethylene carbonate and ethylmethyl carbonate at a volume ratio of 2:8 was used.

$LiPF_6$ was added as a lithium salt to the organic solvent to prepare an electrolyte.

The $LiPF_6$ was included at a molar concentration of 1.2 M in the non-aqueous electrolyte, the ethylene carbonate was included in an amount of 20 wt% in the electrolyte, and the fluoroethylene carbonate was included in an amount of 0.5 wt% in the electrolyte.

<Lithium secondary battery>

A lithium secondary battery was manufactured in the same manner as in Example 1, except that the electrolyte prepared above was used.

**Comparative Example 3**

<Preparation of negative electrode>

A negative electrode active material, a conductive material, and a binder were mixed in a weight ratio of 97:1:2 in distilled water to prepare a negative electrode slurry.

In this case, artificial graphite and SiO were mixed in a weight ratio of 95:5 and used as the negative electrode active material, Super P/SWCNT was used as the conductive material, and styrene-butadiene rubber (SBR) and carboxymethyl cellulose (CMC) were mixed in a weight ratio of 6:4 and used as the binder.

The negative electrode slurry was applied onto a copper thin film, dried, and rolled to prepare a negative electrode.

<Preparation of electrolyte>

An electrolyte was prepared in the same manner as in Example 1.

<Manufacture of lithium secondary battery>

A lithium secondary battery was manufactured in the same manner as in Example 1, except that the negative electrode prepared above was used.

**Comparative Example 4**

<Preparation of negative electrode>

A negative electrode was prepared in the same manner as in Example 1.

<Preparation of electrolyte>

As an organic solvent, a mixture of ethylene carbonate and ethylmethyl carbonate at a volume ratio of 2:8 was used.

$LiPF_6$ was added as a lithium salt to the organic solvent to prepare an electrolyte.

The $LiPF_6$ was included at a molar concentration of 1.2 M in the non-aqueous electrolyte, the ethylene carbonate was included in an amount of 20 wt% in the electrolyte, and the fluoroethylene carbonate was included in an amount of 6 wt% in the electrolyte.

<Lithium secondary battery>

A lithium secondary battery was manufactured in the same manner as in Example 1, except that the electrolyte prepared above was used.

**Comparative Example 5**

<Preparation of negative electrode>

A negative electrode active material, a conductive material, and a binder were mixed in a weight ratio of 97:1:2 in distilled water to prepare a negative electrode slurry.

In this case, artificial graphite and a Si/C composite were mixed in a weight ratio of 93:7 and used as the negative electrode active material (where the Si/C composite contained silicon (Si) and carbon (C) in a weight ratio of 4:10), Super C/SWCNT was used as the conductive material, and styrene-butadiene rubber (SBR) and carboxymethyl cellulose (CMC) were mixed in a weight ratio of 6:4 and used as the binder.

The negative electrode slurry was applied onto a copper thin film, dried, and rolled to prepare a negative electrode.

<Preparation of electrolyte>

An electrolyte was prepared in the same manner as in Example 1.

<Lithium secondary battery>

A lithium secondary battery was manufactured in the same manner as in Example 1, except that the negative electrode prepared above was used.

**Experimental Example 1: SEI Film Composition Analysis**

The lithium secondary batteries of Examples 1 and Comparative Examples 1 were activated and then pretreated to perform CE (Capillary Electrophoresis) analysis to analyze the components of the SEI film. The weight ratio of $Li_2CO_3$:LIF in the SEI film measured by the analysis is shown in Table 1.

The pretreatment was performed by disassembling the lithium secondary battery in a glove box, washing one electrode with methyl propionate for 30 minutes, and then extracting overnight with 2 to 3 mL of D2O.

The CE analysis was performed according to the CE-based inorganic SEI film content analysis method using 'AMT-5591-0k, a new anion coating system (CTAB)' by a CE analysis device (EQC-02999, P/ACE MDQ plus, SCIEX).

[Table 1]

| | .$Li_2CO_3$:LIF (weight ratio) |
|---|---|
| Example 1 | 71:29 |
| Comparative Example 1 | 92:8 |

Referring to Table 1, it is determined that the SEI film formed in the lithium secondary batteries manufactured in Example 1 includes $Li_2CO_3$:LIF so as to satisfy a weight ratio of 1:1 to 3:1, and the SEI film formed in the lithium secondary batteries manufactured in Comparative Example 1 includes $Li_2CO_3$:LIF so as not to satisfy a weight ratio of 1:1 to 3:1.

**Experimental Example 2: Evaluation of lifespan characteristics at high temperature (45 °C)**

Lifespan characteristics of the lithium secondary batteries manufactured in Examples 1 to 3 and Comparative Examples 1 to 5 were measured at 45 °C.

Specifically, each of the lithium secondary batteries manufactured in Examples 1 to 3 and Comparative Examples 1 to 5 was charged at a constant current of 0.33 C up to 4.3 V with a cut off of 0.025 C at 45 °C. Then, the lithium secondary batteries were discharged at a constant current of 0.33 C up to 2.5 V.

The charge and discharge behavior was considered as one cycle, and this cycle was repeated 350 times and then capacity retention after 350 cycles was measured to evaluate the high-temperature lifespan characteristics. The measurement results are shown in Table 2 and FIG. 2.

In this case, the capacity retention was calculated through the following Equation.

Capacity retention (%) = { (discharge capacity after 350th cycle)/(discharge capacity after 1st cycle)} $\times$ 100

[Table 2]

| | Capacity retention [%] (@350 cycle) |
|---|---|
| Example 1 | 92.7 |
| Example 2 | 88.2 |
| Example 3 | 90.1 |
| Comparative Example 1 | 87.4 |
| Comparative Example 2 | 88.1 |
| Comparative Example 3 | 87.3 |
| Comparative Example 4 | 87.5 |
| Comparative Example 5 | 83.7 |

Referring to Table 2 and FIG. 2, it is determined that the lithium secondary batteries manufactured in Examples 1 to 3 are superior to the lithium secondary batteries manufactured in Comparative Examples 1 to 5 in capacity retention at high temperature (45 °C).

**Experimental Example 3: Evaluation of lifespan characteristics**

The lithium secondary batteries manufactured in Examples 1 to 3 and Comparative Examples 1 to 4 were charged up to 4.3 V at 0.33 C at 25 °C and then discharged up to 2.5 V at 0.05 C, which was considered one cycle, and 350 charge-discharge cycles were performed, after which capacity retention and resistance increase rate were measured. The measurement results are shown in Table 3.

In this case, the capacity retention was calculated through the following Equation.

Capacity retention (%) = (discharge capacity after 350th cycle/initial discharge capacity) $\times$ 100

[Table 3]

| | Capacity retention [%] (@350 cycle) |
|---|---|
| Example 1 | 93.1 |
| Example 2 | 88.1 |
| Example 3 | 92.2 |
| Comparative Example 1 | 65.1 |
| Comparative Example 2 | 88.5 |
| Comparative Example 3 | 90.1 |
| Comparative Example 4 | 88.2 |

Referring to Table 3, it is determined that the lithium secondary batteries manufactured in Examples 1 and 3 are superior to the lithium secondary batteries manufactured in Comparative Examples 1 to 4 in capacity retention at room temperature.

**Experimental Example 4: Swelling evaluation**

The lithium secondary batteries manufactured in Examples 1 to 3 and Comparative Examples 1 to 5 were charged up to 4.3 V at 0.33 C at 25 °C and then discharged up to 2.5 V at 0.05 C, which was considered one cycle, and 350 charge-discharge cycles were performed, after which swelling ratio was measured. The measurement results are shown in Table 4.

In this case, the swelling ratio was calculated through the following Equation.

Swelling ratio [%] = (thickness of lithium secondary battery after 350th cycle/initial thickness of lithium secondary battery before cycling) $\times$ 100

[Table 4]

| | Swelling ratio [%] (@350 cycle) |
|---|---|
| Example 1 | 5.1 |
| Example 2 | 6.5 |
| Example 3 | 8.5 |
| Comparative Example 1 | 10.5 |
| Comparative Example 2 | 7.1 |
| Comparative Example 3 | 9.1 |
| Comparative Example 4 | 8.3 |
| Comparative Example 5 | 12.4 |

Referring to Table 4, it is determined that the lithium secondary batteries manufactured in Examples 1 and 2 have a smaller swelling ratio than the lithium secondary batteries manufactured in Comparative Examples 1 to 5.

According to the present invention, a lithium secondary battery includes a lithium transition metal oxide containing nickel, cobalt, and manganese as a positive electrode active material, a mixture of graphite and a Si/C composite as a negative electrode active material, a mixture of a non-fluorinated saturated cyclic carbonate and a fluorine-based compound at a specific weight ratio as an electrolyte, and a fluorine-based compound in a specific amount and may thus inhibit SEI layer rupture induced by volume expansion of the negative electrode active material during battery operation, prevent electrolyte side reactions, and prevent an increase in resistance associated with electrode SEI layer thickening, thereby exhibiting excellent capacity characteristics, and excellent lifespan characteristics, particularly excellent high-temperature lifespan characteristics.

While the present invention has been shown and described in connection with the exemplary embodiments, it will be apparent to those skilled in the art that modifications and variations can be made without departing from the scope of the appended claims

## Claims

1. A lithium secondary battery comprising an electrode assembly comprising a positive electrode, a negative electrode, and a separator placed between the positive electrode and the negative electrode; an electrolyte; and a battery case accommodating the electrode assembly and the electrolyte,

   wherein the negative electrode comprises a negative electrode active material layer containing graphite and a Si/C composite,
   the positive electrode comprises a positive electrode active material layer containing a lithium transition metal oxide represented by Formula 1 as a positive electrode active material:

   [Formula 1] $Li_{1+x1}[Ni_{y1}Co_{z1}Mn_{w1}M^1_{v1}]O_2$

   wherein, in Formula 1 $M^1$ is at least one doping element selected from the group consisting of Al, W, Cu, Fe, V, Cr, Ti, Zr, Zn, In, Ta, Y, In, La, Sr, Ga, Sc, Gd, Sm, Ca, Ce, Nb, Mg, B, and Mo, where $0 \leq x1 \leq 0.2$, $0.50 \leq y1 < 1$, $0 < z1 < 0.35$, $0 < w1 < 0.4$, and $0 \leq v1 \leq 0.1$;
   the electrolyte comprises a non-fluorinated saturated cyclic carbonate and a fluorine-based compound in a weight ratio of 40:1 to 40:20,
   the fluorine-based compound is present in an amount of 1 wt% to 5 wt% with respect to a total weight of the electrolyte; and
   the graphite and the Si/C composite are present in a weight ratio of 93.1:6.9 to 99.9:0.1 in the negative electrode active material layer .

2. The lithium secondary battery of claim 1, wherein the Si/C composite is present in an amount of 1 wt% to 15 wt% with respect to a total weight of the negative electrode active material layer.

3. The lithium secondary battery of claim 1, wherein the Si/C composite contains silicon (Si) and carbon (C) in a weight ratio of 1:10 to 23:10.

4. The lithium secondary battery of claim 1, wherein the graphite and the Si/C composite are present in a weight ratio of 94:6 to 99:1 in the negative electrode active material layer.

5. The lithium secondary battery according to any of claims 1 to 4, wherein the Si/C composite comprises silicon particles embedded within a carbon matrix.

6. The lithium secondary battery according to any of claims 1 to 5, wherein the non-fluorinated saturated cyclic carbonate is present in an amount of 10 wt% to 40 wt% with respect to a total weight of the electrolyte.

7. The lithium secondary battery according to any of claims 1 to 6, wherein the non-fluorinated saturated cyclic carbonate comprises at least one selected from the group consisting of ethylene carbonate (EC), propylene carbonate (PC), 1,2-butylene carbonate, 2,3-butylene carbonate, 1,2-pentylene carbonate and 2,3-pentylene carbonate.

8. The lithium secondary battery according to any of claims 1 to 7, wherein the fluorine-based compound is fluoroethylene carbonate (FEC).

9. The lithium secondary battery according to any of claims 1 to 8, wherein the electrolyte comprises a lithium salt, preferably wherein the lithium salt is present at a concentration of 0.5 M to 2.0 M in the electrolyte.

10. The lithium secondary battery according to any of claims 1 to 9, wherein the electrolyte further comprises a non-fluorinated linear carbonate-based solvent in an amount of 40 wt% to 80 wt% based on a total weight of the electrolyte.

11. The lithium secondary battery according to any of claims 1 to 10, wherein the battery case is a pouch type battery case.

12. A lithium secondary battery comprising an electrode assembly comprising a positive electrode, a negative electrode, and a separator placed between the positive electrode and the negative electrode; an electrolyte; and a battery case accommodating the electrode assembly and the electrolyte,

wherein the negative electrode comprises a negative electrode active material layer containing graphite and a Si/C composite,
the graphite and the Si/C composite are present in a weight ratio of 93.1:6.9 to 99.9:0.1 in the negative electrode active material layer,
the negative electrode comprises a negative electrode active material layer and a solid electrolyte interphase (SEI) layer placed on the negative electrode active material layer, and
the SEI layer contains $Li_2CO_3$ and LiF in a weight ratio of 1:1 to 3:1.

## Patentansprüche

1. Lithium-Sekundärbatterie, umfassend eine Elektrodenanordnung, die eine positive Elektrode, eine negative Elektrode und einen zwischen der positiven Elektrode und der negativen Elektrode angeordneten Separator umfasst; einen Elektrolyten; und ein Batteriegehäuse, das die Elektrodenanordnung und den Elektrolyten aufnimmt,

wobei die negative Elektrode eine Aktivmaterialschicht der negativen Elektrode umfasst, die Graphit und einen Si/C-Verbundstoff enthält,
die positive Elektrode eine Aktivmaterialschicht der positiven Elektrode umfasst, die ein durch Formel 1 dargestelltes Lithium-Übergangsmetalloxid als Aktivmaterial der positiven Elektrode enthält:

[Formel 1] $Li_{1+x1}[Ni_{y1}Co_{z1}Mn_{w1}M^1_{v1}]O_2$

wobei in Formel 1 $M^1$ mindestens ein Dotierelement ist, das aus der Gruppe ausgewählt ist, die aus Al, W, Cu, Fe, V, Cr, Ti, Zr, Zn, In, Ta, Y, In, La, Sr, Ga, Sc, Gd, Sm, Ca, Ce, Nb, Mg, B und Mo besteht, wobei $0 \leq x1 \leq 0.2$, $0.50 \leq y1 < 1{,}0$ < z1 < 0.35, $0 < w1 < 0.4$ und $0 \leq v1 \leq 0.1$;
der Elektrolyt ein nichtfluoriertes gesättigtes cyclisches Carbonat und eine fluorbasierte Verbindung in einem Gewichtsverhältnis von 40:1 bis 40:20 umfasst,
die fluorbasierte Verbindung in einer Menge von 1 Gew.-% bis 5 Gew.-% in Bezug auf ein Gesamtgewicht des Elektrolyten vorhanden ist; und
der Graphit und der Si/C-Verbundstoff in einem Gewichtsverhältnis von 93,1:6,9 bis 99,9:0,1 in der Aktivma-

terialschicht der negativen Elektrode vorhanden sind.

2. Lithium-Sekundärbatterie nach Anspruch 1, wobei der Si/C-Verbundstoff in einer Menge von 1 Gew.-% bis 15 Gew.-% in Bezug auf ein Gesamtgewicht der Aktivmaterialschicht der negativen Elektrode vorhanden ist.

3. Lithium-Sekundärbatterie nach Anspruch 1, wobei der Si/C-Verbundstoff Silizium (Si) und Kohlenstoff (C) in einem Gewichtsverhältnis von 1:10 bis 23:10 enthält.

4. Lithium-Sekundärbatterie nach Anspruch 1, wobei der Graphit und der Si/C-Verbundstoff in einem Gewichtsverhältnis von 94:6 bis 99:1 in der Aktivmaterialschicht der negativen Elektrode vorhanden sind.

5. Lithium-Sekundärbatterie nach einem der Ansprüche 1 bis 4, wobei der Si/C-Verbundstoff Siliziumpartikel umfasst, die in eine Kohlenstoffmatrix eingebettet sind.

6. Lithium-Sekundärbatterie nach einem der Ansprüche 1 bis 5, wobei das nichtfluorierte gesättigte cyclische Carbonat in einer Menge von 10 Gew.-% bis 40 Gew.-% in Bezug auf ein Gesamtgewicht des Elektrolyten vorhanden ist.

7. Lithium-Sekundärbatterie nach einem der Ansprüche 1 bis 6, wobei das nichtfluorierte gesättigte cyclische Carbonat mindestens eines umfasst, das aus der Gruppe ausgewählt ist, die aus Ethylencarbonat (EC), Propylencarbonat (PC), 1,2-Butylencarbonat, 2,3-Butylencarbonat, 1,2-Pentylencarbonat und 2,3-Pentylencarbonat besteht.

8. Lithium-Sekundärbatterie nach einem der Ansprüche 1 bis 7, wobei es sich bei der fluorbasierten Verbindung um Fluorethylencarbonat (FEC) handelt.

9. Lithium-Sekundärbatterie nach einem der Ansprüche 1 bis 8, wobei der Elektrolyt ein Lithiumsalz umfasst, wobei vorzugsweise das Lithiumsalz in einer Konzentration von 0,5 M bis 2,0 M im Elektrolyten vorhanden ist.

10. Lithium-Sekundärbatterie nach einem der Ansprüche 1 bis 9, wobei der Elektrolyt ferner ein Lösungsmittel auf Basis von nichtfluoriertem linearem Carbonat in einer Menge von 40 Gew.-% bis 80 Gew.-% bezogen auf ein Gesamtgewicht des Elektrolyten umfasst.

11. Lithium-Sekundärbatterie nach einem der Ansprüche 1 bis 10, wobei es sich bei dem Batteriegehäuse um ein Batteriegehäuse vom Pouch-Typ handelt.

12. Lithium-Sekundärbatterie, umfassend eine Elektrodenanordnung, die eine positive Elektrode, eine negative Elektrode und einen zwischen der positiven Elektrode und der negativen Elektrode angeordneten Separator umfasst; einen Elektrolyten; und ein Batteriegehäuse, das die Elektrodenanordnung und den Elektrolyten aufnimmt,

wobei die negative Elektrode eine Aktivmaterialschicht der negativen Elektrode umfasst, die Graphit und einen Si/C-Verbundstoff enthält,
der Graphit und der Si/C-Verbundstoff in einem Gewichtsverhältnis von 93,1:6,9 bis 99,9:0,1 in der Aktivmaterialschicht der negativen Elektrode vorhanden sind,
die negative Elektrode eine Aktivmaterialschicht der negativen Elektrode und eine auf der Aktivmaterialschicht der negativen Elektrode angeordnete Festelektrolyt-Interphasen-(SEI)-Schicht umfasst, und
die SEI-Schicht $Li_2CO_3$ und LiF in einem Gewichtsverhältnis von 1:1 bis 3:1 enthält.

## Revendications

1. Batterie secondaire au lithium comprenant un ensemble d'électrodes comprenant une électrode positive, une électrode négative et un séparateur placé entre l'électrode positive et l'électrode négative ; un électrolyte ; et un boîtier de batterie logeant l'ensemble d'électrodes et l'électrolyte,

dans laquelle l'électrode négative comprend une couche de matériau actif d'électrode négative contenant du graphite et un composite Si/C,
l'électrode positive comprend une couche de matériau actif d'électrode positive contenant un oxyde de métal de transition lithié représenté par la Formule 1 en tant que matériau actif d'électrode positive :

[Formule 1] $Li_{1+x1}[Ni_{y1}Co_{z1}Mn_{w1}M^1_{v1}]O_2$

où, dans la Formule 1, $M^1$ est au moins un élément dopant sélectionné dans le groupe constitué par Al, W, Cu, Fe, V, Cr, Ti, Zr, Zn, In, Ta, Y, In, La, Sr, Ga, Sc, Gd, Sm, Ca, Ce, Nb, Mg, B, et Mo, où $0 \leq x1 \leq 0,2$, $0,50 \leq y1 < 1,0 < z1 < 0,35,0 < w1 < 0,4$, et $0 \leq v1 \leq 0,1$;
l'électrolyte comprend un carbonate cyclique saturé non fluoré et un composé à base de fluor dans un rapport pondéral de 40:1 à 40:20,
le composé à base de fluor est présent en une quantité de 1 % en poids à 5 % en poids par rapport à un poids total de l'électrolyte ; et
le graphite et le composite Si/C sont présents dans un rapport pondéral de 93,1:6,9 à 99,9:0,1 dans la couche de matériau actif d'électrode négative.

**2.** Batterie secondaire au lithium selon la revendication 1, dans laquelle le composite Si/C est présent en une quantité de 1 % en poids à 15 % en poids par rapport à un poids total de la couche de matériau actif d'électrode négative.

**3.** Batterie secondaire au lithium selon la revendication 1, dans laquelle le composite Si/C contient du silicium (Si) et du carbone (C) dans un rapport pondéral de 1:10 à 23:10.

**4.** Batterie secondaire au lithium selon la revendication 1, dans laquelle le graphite et le composite Si/C sont présents dans un rapport pondéral de 94:6 à 99:1 dans la couche de matériau actif d'électrode négative.

**5.** Batterie secondaire au lithium selon l'une quelconque des revendications 1 à 4, dans laquelle le composite Si/C comprend des particules de silicium intégrées au sein d'une matrice de carbone.

**6.** Batterie secondaire au lithium selon l'une quelconque des revendications 1 à 5, dans laquelle le carbonate cyclique saturé non fluoré est présent en une quantité de 10 % en poids à 40 % en poids par rapport à un poids total de l'électrolyte.

**7.** Batterie secondaire au lithium selon l'une quelconque des revendications 1 à 6, dans laquelle le carbonate cyclique saturé non fluoré comprend au moins un élément sélectionné dans le groupe constitué par le carbonate d'éthylène (EC), le carbonate de propylène (PC), le carbonate de 1,2-butylène, le carbonate de 2,3-butylène, le carbonate de 1,2-pentylène et le carbonate de 2,3-pentylène.

**8.** Batterie secondaire au lithium selon l'une quelconque des revendications 1 à 7, dans laquelle le composé à base de fluor est le carbonate de fluoroéthylène (FEC).

**9.** Batterie secondaire au lithium selon l'une quelconque des revendications 1 à 8, dans laquelle l'électrolyte comprend un sel de lithium, de préférence dans laquelle le sel de lithium est présent à une concentration de 0,5 M à 2,0 M dans l'électrolyte.

**10.** Batterie secondaire au lithium selon l'une quelconque des revendications 1 à 9, dans laquelle l'électrolyte comprend en outre un solvant à base de carbonate linéaire non fluoré en une quantité de 40 % en poids à 80 % en poids sur la base d'un poids total de l'électrolyte.

**11.** Batterie secondaire au lithium selon l'une quelconque des revendications 1 à 10, dans laquelle le boîtier de batterie est un boîtier de batterie de type poche.

**12.** Batterie secondaire au lithium comprenant un ensemble d'électrodes comprenant une électrode positive, une électrode négative et un séparateur placé entre l'électrode positive et l'électrode négative ; un électrolyte ; et un boîtier de batterie logeant l'ensemble d'électrodes et l'électrolyte,

dans laquelle l'électrode négative comprend une couche de matériau actif d'électrode négative contenant du graphite et un composite Si/C,
le graphite et le composite Si/C sont présents dans un rapport pondéral de 93,1:6,9 à 99,9:0,1 dans la couche de matériau actif d'électrode négative,
l'électrode négative comprend une couche de matériau actif d'électrode négative et une couche d'interphase d'électrolyte solide (SEI) placée sur la couche de matériau actif d'électrode négative, et
la couche SEI contient du $Li_2CO_3$ et du LiF dans un rapport pondéral de 1:1 à 3:1.

[FIG. 1]

200
290
281
280
282
270
30
290
10
20
240
230
242
260
250
234
232

[FIG.2]

100
95
90
85
80
Cycle retention(%)
0
50
100
150
200
250
300
350
Cycle(N)
EXAMPLE 1
EXAMPLE 2
EXAMPLE 3
COMPARATIVE EXAMPLE 1
COMPARATIVE EXAMPLE 2
COMPARATIVE EXAMPLE 3
COMPARATIVE EXAMPLE 4
COMPARATIVE EXAMPLE 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 10088099 B
- KR 20170121283 A
- CN 116759641 A